(19) **Europäisches Patentamt / European Patent Office / Office européen des brevets**

(11) **EP 4 738 270 A1**

(12) **EUROPEAN PATENT APPLICATION**
published in accordance with Art. 153(4) EPC

(43) Date of publication:
06.05.2026 Bulletin 2026/19

(21) Application number: 24830400.8

(22) Date of filing: 31.05.2024

(51) International Patent Classification (IPC):
**G06T 17/20** (2006.01)

(86) International application number:
**PCT/CN2024/096841**

(87) International publication number:
**WO 2025/001753 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 30.06.2023 CN 202310800175

(71) Applicant: **Shining 3D Tech Co., Ltd.**
Hangzhou, Zhejiang 311258 (CN)

(72) Inventors:
• **CHEN, Yue**
Hangzhou, Zhejiang 311258 (CN)
• **JIANG, Tengfei**
Hangzhou, Zhejiang 311258 (CN)

• **LU, Yan**
Hangzhou, Zhejiang 311258 (CN)
• **YU, Zhongyu**
Hangzhou, Zhejiang 311258 (CN)
• **LIU, Wenqi**
Hangzhou, Zhejiang 311258 (CN)
• **CHEN, Xudong**
Hangzhou, Zhejiang 311258 (CN)
• **LIU, Ying**
Hangzhou, Zhejiang 311258 (CN)
• **LI, Jun**
Hangzhou, Zhejiang 311258 (CN)

(74) Representative: **Manitz Finsterwald**
**Patent- und Rechtsanwaltspartnerschaft mbB**
**Martin-Greif-Straße 1**
**80336 München (DE)**

(54) **DIGITAL GENERATION METHOD AND APPARATUS FOR DENTAL BRACES, DEVICE AND MEDIUM**

(57) The present disclosure relates to a digital generation method for dental appliances, apparatus, device, and storage medium. The method includes: acquiring an original three-dimensional (3D) tooth model; adjusting the orientation of the original 3D tooth model continuously, calculating an area of an undercut region of teeth in the original 3D tooth model during each adjustment, and stopping the adjustment and determining an undercut direction until the area of the undercut region meets a preset condition; identifying tooth feature points of each tooth in the original 3D tooth model; generating an edge line on the original 3D tooth model based on a plurality of the tooth feature points; generating a digital model of the dental appliances corresponding to the original 3D tooth model according to the undercut direction, the edge line and preset undercut parameters. The present disclosure may improve the efficiency of generating the digital model of dental appliances.

FIG. 1

S102 — acquiring an original three-dimensional (3D) tooth model

S104 — adjusting the orientation of the original 3D tooth model continuously, calculating an area of an undercut region of teeth in the original 3D tooth model during each adjustment, and stopping the adjustment and determining an undercut direction until the area of the undercut region meets a preset condition

S106 — identifying tooth feature points of each tooth in the original 3D tooth model

S108 — generating an edge line on the original 3D tooth model based on a plurality of the tooth feature points

S110 — generating a digital model of the dental appliances corresponding to the original 3D tooth model according to the undercut direction, the edge line and preset undercut parameters

## Description

The disclosure claims the priority of the Chinese patent application NO. 202310800175.X, which is filed with the China National Intellectual Property Administration on June 30, 2023 and the title "Digital Generation Method for Dental Appliances, Apparatus, Device and Storage Medium", which is incorporated by reference in its entirety.

## TECHNICAL FIELD

The present disclosure relates to the technical field of intelligent stomatology, more specifically, to a digital generation method for dental appliances, apparatus, device and storage medium.

## BACKGROUND

With the popularization of digitalization in dentistry, the production of dental products, such as night guards and orthodontic retainers, using 3D printing has gradually become widespread. The generation of digital models for dental products may require numerous parameters, for example, the direction of undercuts, the position of edge lines, etc. Currently, in the process from importing dentognathic data to generating dental products, it is necessary to manually set parameters described above step by step according to a specific procedure for generating the model. The processing for generating model is overly complex, which may not only incur learning costs but also require users to perform multiple interactive operations during each process, resulting in a cumbersome adjustment procedure and low efficiency.

## SUMMARY

(1) Technical Problems

The technical problem to be solved by the present disclosure is to address the issues existing in the current model generation process, such as complexity, high learning costs, cumbersome adjustment procedures, and low efficiency.

(2) Technical Solutions

**In** order to address the above-mentioned technical problems, the embodiments of the present disclosure provide a digital generation method of dental appliances, apparatus, device, and storage medium.
According to one aspect of the present disclosure, a digital generation method of dental appliances is provided. The method may include:

acquiring an original three-dimensional (3D) tooth model;

adjusting the orientation of the original 3D tooth model continuously, calculating an area of an undercut region of teeth in the original 3D tooth model during each adjustment, and stopping the adjustment and determining an undercut direction until the area of the undercut region meets a preset condition;

identifying tooth feature points of each tooth in the original 3D tooth model;

generating an edge line on the original 3D tooth model based on a plurality of the tooth feature points;

generating a digital model of the dental appliances corresponding to the original 3D tooth model according to the undercut direction, the edge line and preset undercut parameters.

According to another aspect of the present disclosure, a digital generation apparatus of dental appliances is provided. the digital generation apparatus may include:

a model acquisition module configured to acquire an original three-dimensional (3D) tooth model;

an undercut direction determination module configured to adjust the orientation of the original 3D tooth model continuously, calculate an area of an undercut region of teeth in the original 3D tooth model during each adjustment, and stop the adjustment and determine an undercut direction until the area of the undercut region meets a preset condition;

a feature recognition module configured to identify tooth feature points of each tooth in the original 3D tooth model;

an edge line generation module configured to generate an edge line on the original 3D tooth model based on a plurality of the tooth feature points;

a model generation module configured to generate a digital model of the dental appliances corresponding to the original 3D tooth model according to the undercut direction, the edge line and preset undercut parameters.

According to another aspect of the present disclosure, an electronic device is provided. The electronic device may include:

a processor;

a memory for storing executable instructions of the processor;

the processor is configured to read executable instructions from the memory and execute the instructions to implement the method described above.

According to another aspect of the present disclosure, a computer-readable storage medium is provided, which stores a computer program, and the computer program is used to execute the method described above.

(III) Beneficial Effects

Compared with the existing technology, the above technical solutions provided by the embodiments of the present disclosure have the following advantages: The digital generation method of the dental appliances, apparatus, device, and storage medium provided by the embodiments of the present disclosure may include: for the obtained original three-dimensional (3D) tooth model, firstly, adjusting continuously the orientation of the original 3D tooth model, and calculating the area of the undercut region of the teeth in the original 3D tooth model during each adjustment; stopping the adjustment and determining the undercut direction until the area of the undercut region meets the preset condition; Secondly, identifying the tooth feature points of each tooth in the original 3D tooth model, and generating the edge line on the original 3D tooth model based on the multiple tooth feature points; Then, according to the undercut direction, the edge line, and the preset undercut parameters, generating the digital model of dental appliances corresponding to the original 3D tooth model.

The present solution may change the area of the undercut region by continuously adjusting the orientation of the original 3D tooth model, thereby resulting in determining the undercut direction rapidly and accurately; generate the edge lines using tooth feature points rapidly and accurately without manual adjustment of the edge lines; read the undercut parameters directly which is convenient and efficient. It can be seen that the above-mentioned key parameters used for generating the digital model of dental appliances may all be automatically calculated without manual adjustment by the user, which improves the efficiency of parameter calculation. Furthermore, the use of the undercut direction, edge line, and undercut parameters may effectively improve the efficiency of generating the digital model of dental appliances.

It should be understood that the above general description and the following detailed description are merely exemplary and explanatory, and shall not limit the present disclosure.

**BRIEF DESCRIPTION OF THE DRAWINGS**

The drawings are incorporated into and constitute a part of the specification, illustrate embodiments consistent with the present disclosure, and is used to explain the principles of the present disclosure together with the specification.

In order to more clearly illustrate the technical solutions in the embodiments of the present disclosure or in the prior art, the following will briefly introduce the drawings needed in the description of the embodiments or the prior art. Obviously, for those people with ordinary skill in the art, other drawings may also be obtained based on these drawings without making creative efforts.

FIG. 1 is a flow chart of a digital generation method for dental appliances provided by an embodiment of the present disclosure;

FIG. 2 is a schematic diagram of an original three-dimensional tooth model provided by an embodiment of the present disclosure;

FIG. 3 is a schematic diagram of the original three-dimensional tooth model after adjusting orientation provided by an embodiment of the present disclosure;

FIG. 4 is a schematic diagram of a edge line with a straight-line type provided by an embodiment of the present disclosure;

FIG. 5 is a schematic diagram of a edge line with a curve-type provided by an embodiment of the present disclosure;

FIG. 6 is a schematic diagram of undercut parameters provided by an embodiment of the present disclosure;

FIG. 7 is a schematic diagram of generating a digital model of dental appliances automatically provided by an embodiment of the present disclosure;

FIG. 8 is a structural block diagram of an digital generation apparatus for dental appliances provided by an embodiment of the present disclosure;

FIG. 9 is a structural schematic diagram of an electronic device provided by an embodiment of the present disclosure.

**DETAILED DESCRIPTION**

In order to make objectives, technical solutions, and advantages of the embodiments of the present disclosure clearer, the technical solutions in the embodiments of the present disclosure will be described clearly and completely below. Obviously, the described embodiments are part of the embodiments of the present disclosure, rather than all of them. Based on the embodiments in the present disclosure, all other embodiments obtained by those of ordinary skill in the art without making creative efforts shall fall within the protection scope of the present disclosure.

Currently,, for dental products, such as night guards and orthodontic retainers, during the process of generating digital models, due to the inability to obtain feature points of teeth, for example, tooth orientation, the buccolingual cervical point of the crown and buccolingual gingival papilla point, it is impossible to obtain optimal data of the necessary parameters for generating digital models of dental products. The parameters include undercuts direction, the position of edge lines, the model thickness of products such as night guards or orthodontic retainers, and the relief space between the model and the original dentognathic jaw. Therefore, during process of generating the model, it may be required to perform a plurality of interactive operations to achieve the desired results of the user, leading to problems such as complex and cumbersome operations and low efficiency. Thus, the embodiments of the present disclosure provide a digital generation method for dental appliances, apparatus, device, and storage medium. To facilitate understanding, the following description elaborates on the embodiments of the present disclosure.

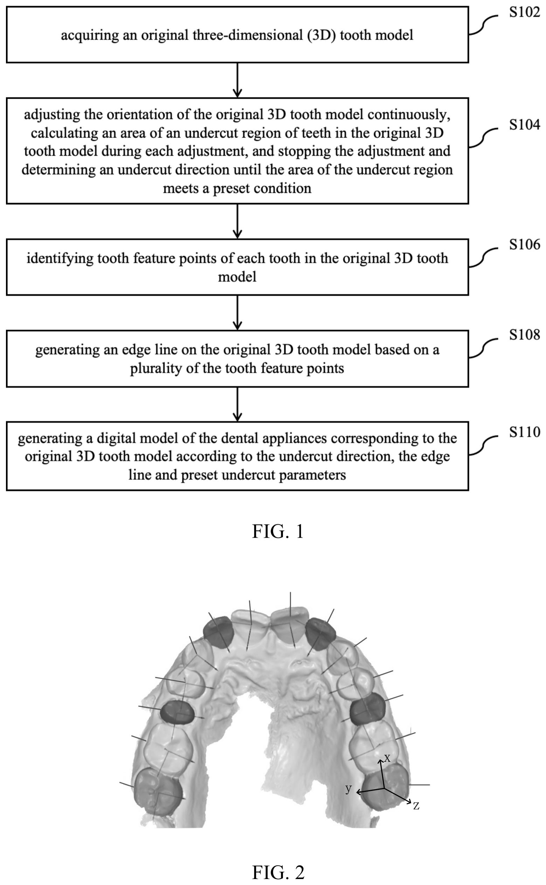

FIG. 1 is a flow chart of a digital generation method for dental appliances provided by an embodiment of the present disclosure. The method may be executed by a digital generation apparatus for dental appliances configured in a terminal, and the apparatus may be implemented by software and/or hardware. As shown in FIG. 1, the digital generation method for dental appliances may include the following steps.

S102. Acquiring an original three-dimensional (3D) tooth model.

In the present embodiment, an oral scanning device may be used to obtain a plurality of scanned images by performing a global scan of the upper or lower row of teeth in oral cavity. And then an original 3D tooth model of the overall teeth may be generated based on the plurality of scanned images. The 3D tooth model may be referred to FIG. 2.

S104. Adjusting the orientation of the original 3D tooth model continuously, calculating an area of an undercut region of teeth in the original 3D tooth model during each adjustment, and stopping the adjustment and determining an undercut direction until the area of the undercut region meets a preset condition

Since the crown of a tooth is wider than the root, there is an undercut that is wide at the top and narrow at the bottom between adjacent teeth. During the process of generating the digital model of the dental appliances, it is necessary to filling the undercut on the original 3D tooth model.

For users, the undercut region may be an area that cannot be seen on the original 3D tooth model. When the orientation of the original 3D tooth model is adjusted, the undercut region also changes in real time accordingly. Based on the situation, the orientation of the original 3D tooth model can be adjusted. When the original 3D tooth model is adjusted to a certain orientation, and the orientation may make the area of the undercut region meet a preset condition, the orientation may be considered as relatively reasonable insertion path direction, which may provide a comfortable wearing experience for the user.

In the present embodiment, the orientation of the original 3D tooth model may be adjusted multiple times, and in each adjustment of the orientation, the area of the undercut region of the teeth in the original 3D tooth model may be calculated. There may be a plurality of ways to determine the undercut region in the present embodiment. For example, for the undercut region between any two adjacent teeth, the digital meshes of the two adjacent teeth may be obtained from the original 3D tooth model, and the undercut region of the two adjacent teeth may be determined based on these digital tooth meshes.

Alternatively, in another example, the mesial control points and distal control points of the undercut between adjacent teeth in the original 3D tooth model may be identified, wherein the mesial control points and the distal control points may well describe a shape of the undercut between adjacent teeth; the undercut region may be determined based on the mesial control points and distal control points.

After determining the undercut region between each pair of adjacent teeth, the area of the undercut region may be determined. **In** the case, the adjustment may be stopped when the area of the undercut region meets the preset condition, which may be referred to as follows.

The area weighted average of the undercut regions of the plurality of teeth may be determined according to the undercut regions of each tooth in the original 3D tooth model and a preset weighting coefficient for each tooth; whether the area weighted average meets the preset condition may be determined; wherein the preset condition includes the area weighted average is minimum value, or the area weighted average is less than a preset area threshold; in the case that the area weighted average meets the preset condition, the adjustment of the orientation of the original 3D tooth model may be obtained and the current orientation may be maintained.

It is understood that the larger the undercut region, the looser the dental appliances will be; at the same time, for different types of dental deformities, teeth in different positions have different requirements for the tightness of the dental appliances. Based on this, different weighting coefficients may be set for different teeth. The weighting coefficient indicates the tightness of the dental appliances when worn on the current tooth, or indicates a required area of the undercut region for the current tooth.

With reference to the following formula, and according to the undercut regions of each tooth in the original 3D tooth model and the preset weighting coefficient for each tooth, the area weighted average of the undercut regions of a plurality of teeth may be determined.

$$\bar{s} = \frac{\sum_i \lambda_i s_i}{n}$$

Wherein, $s_i$ represents the area of the undercut region of the tooth numbered i, $\lambda_i$ represents the weighting coefficient of the tooth i, n represents the total number of teeth, and $\bar{s}$ represents the area weighted average of the undercut regions of the n teeth.

According to the above embodiments, during the process of adjusting the orientation of the original three-dimensional tooth model continuously, each orientation corresponds to one area weighted average of the undercut regions under the orientation.

In one embodiment, after adjusting the orientation of the original 3D tooth model each time and obtaining the area weighted average of the undercut regions under the current orientation, it is determined whether the area weighted average of the undercut regions is less than a preset area threshold. In the case that the area weighted average of the undercut regions is not less than the preset area threshold, the adjustment of the orientation of the original 3D tooth model may be continued; in the case that the area weighted average of the undercut regions is less than the preset area threshold, the adjustment of the orientation of the original 3D tooth model may stopped, the current orientation may be maintained; and then subsequent steps such as determining the undercut direction may be performed under the current orientation.

In another embodiment, after adjusting the orientation of the original 3D tooth model each time and obtaining the area weighted average of the undercut regions under the current orientation,, it is determined whether the area weighted average of the undercut regions is the minimum value. In the case that the area weighted average of the undercut regions is not the minimum value, the adjustment of the orientation of the original 3D tooth model may be continued.

In the case that the area weighted average of the undercut regions is the minimum value, it can be determined whether the current area weighted average of the undercut regions is a valid minimum value according to the number of times the orientation has been adjusted and/or the number of occurrences of the minimum area weighted average of the undercut regions.

Suppose that the orientation of the original three-dimensional tooth model is adjusted twice, two area weighted averages of the undercut regions may be obtained; and then there must be one area weighted averages of the undercut regions that is the minimum value; however, the minimum value is obviously inaccurate. Therefore, in the present embodiment, by considering the number of times the orientation has been adjusted and/or the number of occurrences of the area weighted average of the undercut regions, it is possible to further determine whether the current weighted average of the areas of the undercut regions is a valid minimum value.

In one example, it can be determined whether the number of times the orientation has been adjusted has reached a preset reference number of times (e.g., 10 times). In the case that the number of times the orientation has been adjusted has reached the preset reference number of times, it means that the current area weighted average of the undercut regions is the minimum value among 10 orientation adjustment processes, and thus it may be confirmed that the area weighted average is a valid minimum value. In the case that the number of times the orientation has been adjusted has not reached a preset reference number of times, the area weighted average may be ignored, and the adjustment of the orientation of the original 3D tooth model may be continued.

In another example, it can be determined whether the number of occurrences of the weighted average of the areas of the undercut regions is at least twice. In the case that the number of occurrences of the weighted average of the areas of the undercut regions is at least twice, it means that the minimum area weighted average has occurred multiple times, which reduces randomness, and thus the area weighted average may be determined as a valid minimum value. Conversely, the area weighted average may be ignored, and the adjustment of the orientation of the original 3D tooth model can be continued.

Of course, it is also possible to jointly determine whether the current area weighted average of the undercut regions is a valid minimum value based on the number of times the orientation has been adjusted and the number of occurrences of the minimum area weighted average of the undercut regions. For example, when the number of times the orientation has been adjusted reaches the preset reference number of times, and the number of occurrences of the minimum area weighted average of the undercut regions is at least twice, it may be determined that the area weighted average is a valid minimum value. The judgment method may be more accurate and avoid misjudging the minimum area weighted average.

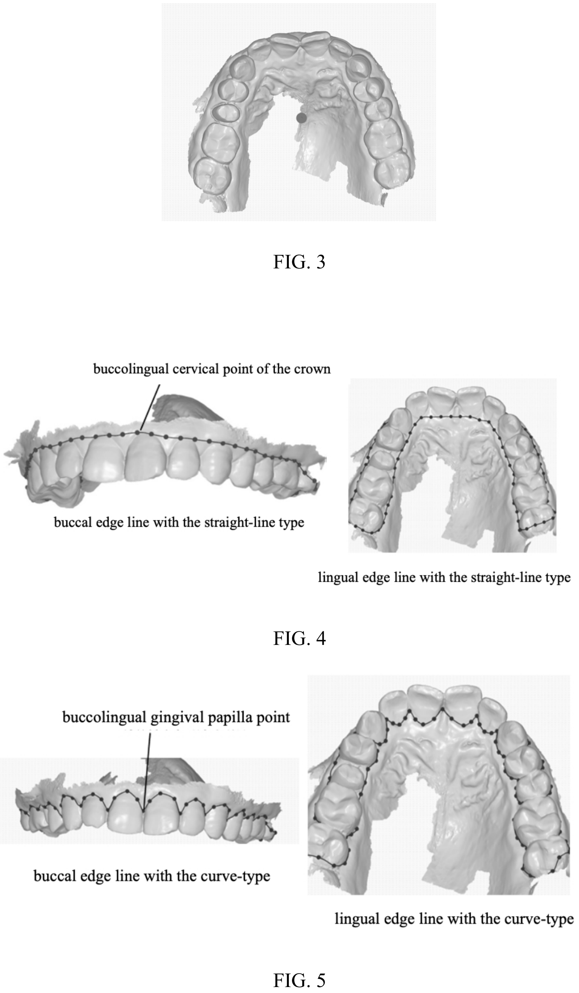

According to the above embodiments, the adjustment may be stopped when it is determined that the area of the undercut region meets the preset condition. At this time, the orientation of the original 3D tooth model is the ideal orientation suitable for wearing dental appliances, which can be referred to FIG. 3. And then, the undercut direction at current time may be determined. The embodiments for determining the undercut direction may include the following contents.

For any tooth in the original 3D tooth model, a coordinate system may formed with mesiodistal direction, buccolingual direction and long axis direction as coordinate axis directions, and a center point of any tooth as a coordinate origin. The direction of any tooth may calculated in the coordinate system; the average value of the directions of multiple teeth in the 3D teeth may be determined as the undercut direction.

With reference to the coordinate system shown on tooth 27 in FIG. 2, it should be understood that each tooth in the original 3D tooth model may have its own coordinate system. Tooth 27 may be only used as an example for easy viewing. In the coordinate system of tooth 27, the center point of tooth 27 is the coordinate origin, the mesiodistal direction is the x-axis direction, the buccolingual direction is the y-axis direction, and the long axis direction is the z-axis direction. The position and direction of tooth 27 may be calculated under the coordinate system. In the same way, the relative positions and directions of each tooth in 3D space may be obtained. And then, the average value of the directions of all teeth may be determined as the direction of the entire original 3D tooth model in the world coordinate system, which is the undercut direction and also the insertion path direction.

S106. Identifying tooth feature points of each tooth in the original 3D tooth model.

In the present embodiment, a preset recognition model may be used to identify the buccolingual feature points of each tooth to obtain the tooth feature points of each tooth at target positions, wherein the target positions include the buccolingual cervical point of the crown and buccolingual gingival papilla point.

In specific implementation, multiple tooth segmentation regions may be obtained by performing regional segmentation firstly on each tooth in the 3D tooth model according to a regional segmentation algorithm. And then, the preset recognition model is used to identify the buccolingual feature points in the multiple tooth segmentation regions to obtain the tooth feature points in each tooth segmentation region. The tooth feature points may include the buccolingual cervical point of the crown and buccolingual gingival papilla point, wherein the buccolingual direction refers to the orientation in the oral cavity based on the positions of the buccal surface and lingual surface of the posterior dental crown. It means that the buccolingual cervical point of the crown includes the buccal most apical point of the tooth and the lingual most apical point of the tooth; the buccolingual gingival papilla point includes the buccal gingival papilla point and the lingual gingival papilla point.

In the actual production of products, products with a straight-line boundary line, such as night guards generally, may take the buccolingual cervical point of the crown as a reference, while products with a curve-type boundary line, such as orthodontic retainers, may generally take the buccolingual cervical point of the crown and the buccolingual gingival papilla point as references. Therefore, the buccolingual target positions in the present embodiment may include, for example, the buccolingual cervical point of the crown as shown in FIG. 4 and the buccolingual gingival papilla point as shown in FIG. 5.

S108. Generating an edge line on the original 3D tooth model based on multiple tooth feature points.

In the present embodiment, different types of edge lines may be generated corresponding to tooth feature points at different target positions. To facilitate understanding,, several possible embodiments are provided below.

In one embodiment of generating an edge line, a edge line with a straight-line type on the original 3D tooth model may be generated based on the tooth feature points at the buccolingual apical point points of the teeth. Specifically, in the original 3D tooth model, according to the order of tooth numbers, the tooth feature points at the buccolingual apical point points in each tooth segmentation region may be connected in sequence to generate a first closed connecting line; the edge line with the straight-line type on the original 3D tooth model may be obtained by performing spline fitting on the first closed connecting line. The edge line with the straight-line type may refer to the two viewing angles shown in FIG. 4, wherein the left figure of FIG. 4 is the buccal edge line with the straight-line type, and the right figure of FIG. 4 is the lingual edge line with the straight-line type. It may be understood that the straight-line type is relative to the curve type, and is not a geometrically straight line.

In another embodiment of generating the edge line, the edge line with the curve-type on the original 3D tooth model may be generated based on the tooth feature points at the buccolingual apical point points of the teeth and the gingival papilla points. Specifically, in the original 3D tooth model, according to the order of tooth numbers and contour lines of the tooth segmentation regions, the tooth feature points at the buccolingual apical point points and the gingival papilla points in each tooth segmentation region may be connected in sequence to generate a second closed connecting line; the edge line with the curve-type on the original 3D tooth model may be obtained by performing spline fitting on the second closed connecting line. The edge line with the curve-type may refer to the two viewing angles shown in FIG. 5, wherein the left figure of FIG. 5 is the buccal edge line with the curve-type, and the right figure of FIG. 5 is the lingual edge line with the curve-type.

S110. Generating a digital model of dental appliances corresponding to the original 3D tooth model according to the undercut direction, edge line, and preset undercut parameters.

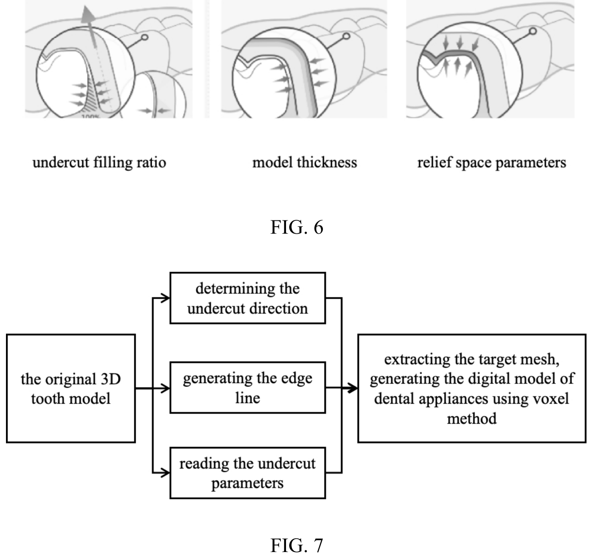

In practical applications, in addition to the undercut direction and edge line mentioned in the previous embodiments, undercut parameters may also affect the final form of the digital model of dental appliances such as night guards or orthodontic retainers. As shown in FIG. 6, undercut parameters generally include undercut filling ratio, model thickness, and relief space parameters between the model and the dentognathic jaw.

The undercut parameters may be optimal default parameter values that meet public requirements, obtained based on practical work experience of doctors and adjustments through multiple parameter experiments. During use, the undercut parameters may be directly read without the need for adjustment.

In the present embodiment, generating the digital model of dental appliances corresponding to the original 3D tooth model according to the undercut direction, the edge line, and the preset undercut parameters may include the following steps:

obtaining a target three-dimensional tooth model by filling the undercut region of the original 3D tooth model according to the undercut filling ratio; taking the undercut direction as an insertion path direction of the digital model of dental appliances to be generated; obtaining a target mesh by extracting the mesh of the target 3D tooth model along the insertion path direction and with the edge line as the boundary line; generating the digital model of dental appliances corresponding to the original 3D tooth model by performing surface reconstruction on the target mesh according to the voxel method, the model thickness and the relief space parameters between the model and the dentognathic jaw.

In the present embodiment, since the target mesh is obtained by extracting the target 3D tooth model with the undercut direction as the insertion path direction and the edge line as the boundary line, the target mesh has a good match with the dentognathic jaw of the user. In addition, by using the voxel method and according to the model thickness and the relief space parameters between the model and the dentognathic jaw, the digital model of the dental appliances by performing surface reconstruction work, such as marginalization and surface smoothing, on the extracted mesh may meet the requirements for wearing comfort in terms of model thickness and gap.

Based on the digital generation method for dental appliances provided in the above embodiments, a specific example of automatically generating a digital model of dental appliances by applying the method is provided.

With reference to FIG. 7, the original 3D tooth model is obtained through scanning and imported into an electronic device with computing capability or software installed on the electronic device. The undercut direction may be determined by continuously adjusting the orientation of the original 3D tooth model until the area of the undercut region reaches the minimum value or is less than the preset area threshold. The tooth feature points of each tooth in the original 3D tooth model may be identified; The edge line on the original 3D tooth model based on the multiple tooth feature points may be generated. The undercut parameters may be readout. The target mesh may be extracted from the target 3D tooth model based on the undercut direction, edge line, and preset undercut parameters, and the digital model of the dental appliances may be generated using the voxel method. Finally, the digital model of the dental appliances may be output through the electronic device or software.

During the entire process of generating the digital model of the dental appliances described above, there is no need for the user to manually set or adjust parameters. Instead, the undercut direction is automatically determined, the edge line is automatically generated, and the undercut parameters are automatically read in accordance with the digital generation method for dental appliances; and then the digital model of the dental appliances is generated based on the parameters. The present embodiment may automatically generate the digital model of the dental appliances, which may improve the efficiency of model generation, significantly reduce the number of user interactive operations, save user time, and lower the difficulty of user adjustment.

In some embodiments, before generating the digital model of dental appliances corresponding to the original 3D tooth model based on the undercut direction, the edge line, and the preset undercut parameters, the method includes:

acquiring preset user information, wherein the user information is used to indicate that whether the type of the edge line to be generated is a straight-line type or a curve type, and the values of the preset undercut parameters.

The user information may include the medical visit information of the user, wherein the medical visit information of the user indicates which type of dental correction the user needs clearly and generally. Since the type of edge line corresponding to each type of dental correction is fixed, the user information about the edge line to be generated may be determined based on the medical visit information of the user. For example, the edge line with straight-line type is applied to night guards, and the edge line with the curve type is applied to orthodontic retainers.

The user information may include the patient history of the user. Different patients may correspond to specific undercut parameters. For instance, some patients may not adapt to bite pads such as night guards or orthodontic retainers with a relatively thick thickness; some patients have overly crowded dentitions and cannot adapt to night guards or orthodontic retainers with 100% undercut filling ratio. In addition, the undercut parameters of night guards and orthodontic retainers may be the same or be fine-tuned according to the settings of doctors. Therefore, by acquiring preset user information, it is possible to automatically and quickly determine whether the type of the edge line to be generated is a straight-line type or a curve type, and the values of the preset undercut parameters, which may enable personalized customization of dental appliances, and allow for the generation of braces such as night guards, orthodontic retainers, and appliances, thereby enhancing user comfort.

The digital model generation method for dental appliances provided in the embodiments of the present disclosure include: for the obtained original 3D tooth model, firstly, adjusting continuously the orientation of the original 3D tooth model, and calculating the area of the undercut region of the teeth in the original 3D tooth model during each adjustment; stopping the adjustment and determining the undercut direction until the area of the undercut region meets the preset condition; Secondly, identifying the tooth feature points of each tooth in the original 3D tooth model, and generating the edge line on the original 3D tooth model based on the multiple tooth feature points; Then, according to the undercut direction, the edge line, and the preset undercut parameters, generating the digital model of dental appliances corresponding to the original 3D tooth model.

In the technical solution, among several key parameters required for generating the digital model of dental appliances, the area of the undercut region may be changed by continuously adjusting the orientation of the original 3D tooth model, thus a better and more accurate undercut direction can be quickly determined; the tooth feature points may be used to generate the edge line rapidly and accurately without manual adjustment of the edge line; The undercut parameters may be directly read, which is convenient and efficient. It can be seen that the above-mentioned key parameters used for generating the digital model of dental appliances may all be automatically calculated without manual adjustment by the user, which improves the efficiency of parameter calculation. Furthermore, the use of the undercut direction, edge line, and undercut parameters may improve the efficiency of generating the digital model of dental appliances. In addition, each of the above parameters is a high-quality parameter with higher accuracy, enabling the digital model of dental appliances being more matched with the dentognathic jaw of the user, and improving the wearing comfort of the user.

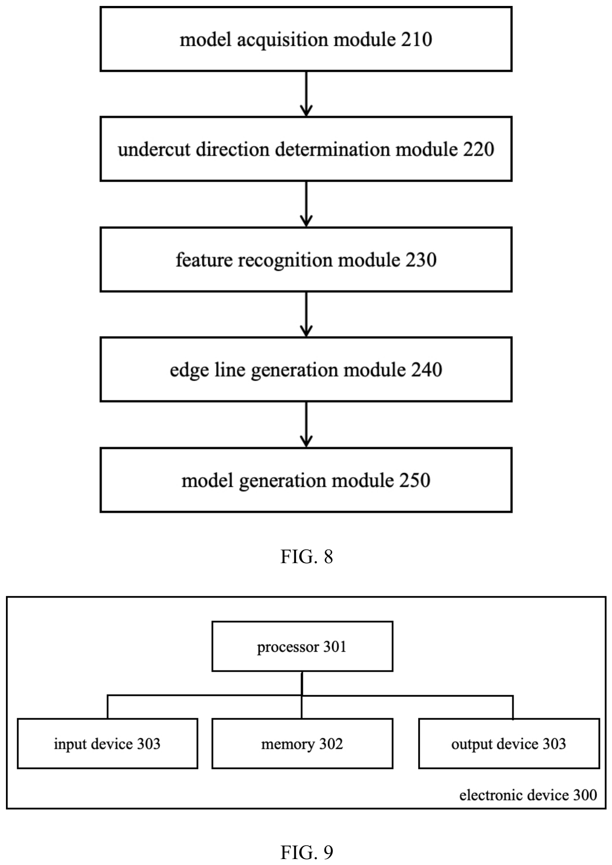

FIG. 8 is a structural block diagram of a digital generation apparatus for dental appliances provided by an embodiment of the present disclosure. The apparatus may be used to implement the digital generation method for dental appliances provided by the above embodiments. As shown in FIG. 8, the digital generation apparatus for dental appliances may include the following modules:

A model acquisition module 210 is configured to acquire an original three-dimensional (3D) tooth model;
an undercut direction determination module 220 configured to adjust the orientation of the original 3D tooth model continuously, calculate an area of an undercut region of teeth in the original 3D tooth model during each adjustment, and stop the adjustment and determine an undercut direction until the area of the undercut region meets a preset condition;
a feature recognition module 230 configured to identify tooth feature points of each tooth in the original 3D tooth model;
an edge line generation module 240 configured to generate an edge line on the original 3D tooth model based on a plurality of the tooth feature points;
a model generation module 250 configured to generate a digital model of the dental appliances corresponding to the original 3D tooth model according to the undercut direction, the edge line and preset undercut parameters.

In one embodiment, the undercut direction determination module 220 is further configured to:

determine area weighted average value of the undercut regions of multiple teeth according to the undercut regions of each tooth in the original 3D tooth model and preset weighting coefficient of each tooth;
determine whether the area weighted average value meets the preset condition, wherein the preset condition comprises the area weighted average value is minimum value, or the area weighted average value is less than a preset area threshold;
in the case that the area weighted average value meets the preset condition, stop adjusting the orientation of the original 3D tooth model and maintain the current orientation.

In one embodiment, the undercut direction determination module 220 is further configured to:

For any tooth in the original 3D tooth model, form a coordinate system with mesiodistal direction, buccolingual direction and long axis direction as coordinate axis directions, and a center point of any tooth as a coordinate origin, and calculate a direction of any tooth in the coordinate system;
determine the average value of the directions of teeth in the 3D teeth as the undercut direction.

In one embodiment, the feature recognition module 230 is further configured to:
obtain the tooth feature points of each tooth at target positions by identifying buccolingual feature points in each tooth through a preset recognition model, wherein the target positions comprise buccolingual cervical point of the crown and buccolingual gingival papilla point.

In one embodiment, the edge line generation module 240 is further configured to:

generate the edge line with a straight-line type on the original 3D tooth model based on the tooth feature points at the buccolingual cervical point of the crown; or,
generate edge line with a curve-type on the original 3D tooth model based on the tooth feature points at the buccolingual cervical point of the crown and the tooth feature points at the gingival papilla points.
in one embodiment, the undercut parameters include undercut filling ratio, model thickness, and relief space parameters between the model and the dentognathic jaw.

The model generation module 250 is further configured to:

obtain a target 3D tooth model by filling the undercut region of the original 3D tooth model according to the undercut filling ratio;
take the undercut direction as an insertion path direction of the digital model of the dental appliances to be generated;
obtain a target mesh by performing mesh extraction on the target 3D tooth model according to the insertion path direction and with the edge line as the boundary line;
generate the digital model of the dental appliances corresponding to the original 3D tooth model by performing surface reconstruction on the target mesh according to a voxel method, the model thickness, and the relief space parameters between the model and the dentognathic jaw.

In one embodiment, the device further includes a user information acquisition module configured to: acquire preset user information, wherein the user information is used to indicate whether the type of the edge line to be generated is a straight-line type or a curve type, and the values of the preset undercut parameters.

The implementation principle and technical effects of the apparatus provided in the present embodiment are the same as those of the aforementioned method embodiment. For the sake of brief description, for parts not mentioned in the device embodiment, reference can be made to the corresponding contents in the aforementioned method embodiment.

FIG. 9 is a schematic structural diagram of an electronic device provided by an embodiment of the present disclosure. As shown in FIG. 9, the electronic device 300 includes one or more processors 301 and a memory 302.

The processor 301 may be a central processing unit (CPU) or another form of processing unit with data processing capabilities and/or instruction execution capabilities, and may control other components in the electronic device 300 to perform desired functions.

The memory 302 may include one or more computer program products, and the computer program products may include various forms of computer-readable storage media, such as volatile memory and/or non-volatile memory. Volatile memory may include, for example, random access memory (RAM) and/or cache memory, etc. Non-volatile memory may include, for example, read-only memory (ROM), a hard disk, flash memory, etc. One or more computer program instructions may be stored on the computer-readable storage medium, and the processor 301 may run the program instructions to implement the digital generation method for dental appliances according to the embodiments of the present disclosure described above and/or other desired functions. Various contents such as input signals, signal components, noise components, etc. may also be stored in the computer-readable storage medium.

In one example, the electronic device 300 may further include: an input device 303 and an output device 304, and the components are interconnected via a bus system and/or other forms of connection mechanisms (not shown).

In addition, the input device 303 may further include, for example, a keyboard, a mouse, and the like.

The output device 304 can output various information to the outside, including determined distance information, orientation information, and the like. The output device 304 may include, for example, a display, a speaker, a printer, a communication network, and remote output devices connected thereto, and so on.

For the sake of simplification, only some of the components in the electronic device 300 that are related to the present disclosure are shown in FIG. 9, and components such as a bus and input/output interfaces are omitted. In addition, according to specific application scenarios, the electronic device 300 may also include any other appropriate components.

Further, the present embodiment also provides a computer-readable storage medium, wherein a computer program is stored, and the computer program is used to execute the digital generation method for dental appliances described above.

The computer program product related to the digital generation method, apparatus, electronic device, and storage medium for dental appliances provided by the embodiments of the present disclosure may include a computer-readable storage medium storing program codes. The instructions included in the program codes may be used to execute the methods in the foregoing embodiments. The specific implementation may refer to the method embodiments, and details are not repeated.

It should be noted that in the present disclosure, relational terms such as "first" and "second" are merely used to distinguish one entity or operation from another entity or operation, and do not necessarily require or imply that there is any such actual relationship or order between these entities or operations. Moreover, the terms "include", "comprise" or any other variants thereof are intended to cover non-exclusive inclusion, so that a process, method, article or device including a series of elements not only includes those elements, but also includes other elements not explicitly listed, or also includes elements inherent to such a process, method, article or device. Without more restrictions, an element defined by the phrase "include a..." does not exclude the existence of other identical elements in the process, method, article or device that includes the element.

The above are only specific implementations of the present disclosure, enabling those skilled in the art to understand or implement the present disclosure. Various modifications to these embodiments will be obvious to those skilled in the art, and the general principles defined herein can be implemented in other embodiments without departing from the spirit or scope of the present disclosure. Therefore, the present disclosure will not be limited to the embodiments shown herein, but should conform to the widest scope consistent with the principles and novel features disclosed herein

Industrial Applicability

The digital generation method for dental appliances provided in the present disclosure may change the area of the undercut region by continuously adjusting the orientation of the original 3D tooth model, thereby resulting in determining the undercut direction rapidly and accurately; generate the edge lines using tooth feature points rapidly and accurately without manual adjustment of the edge lines; read the undercut parameters directly which is convenient and efficient. It can be seen that the above-mentioned key parameters used for generating the digital model of dental appliances may all be automatically calculated without manual adjustment by the user, which improves the efficiency of parameter calculation. Furthermore, the use of the undercut direction, edge line, and undercut parameters may effectively improve the efficiency of generating the digital model of dental appliances, thus having strong industrial applicability.

## Claims

1. A digital generation method for dental appliances, **characterized by** comprising:

   acquiring an original three-dimensional 3D tooth model;
   adjusting the orientation of the original 3D tooth model continuously, calculating an area of an undercut region of teeth in the original 3D tooth model during each adjustment, and stopping the adjustment and determining an undercut direction until the area of the undercut region meets a preset condition;
   identifying tooth feature points of each tooth in the original 3D tooth model;
   generating an edge line on the original 3D tooth model based on a plurality of the tooth feature points;
   generating a digital model of the dental appliances corresponding to the original 3D tooth model according to the undercut direction, the edge line and preset undercut parameters.

2. The method according to claim 1, **characterized in that** stopping the adjustment until the area of the undercut region meets the preset condition comprise:

   determining area weighted average value of the undercut regions of multiple teeth according to the undercut regions of each tooth in the original 3D tooth model and preset weighting coefficient of each tooth;
   determining whether the area weighted average value meets the preset condition, wherein the preset condition comprises the area weighted average value is minimum value, or the area weighted average value is less than a preset area threshold;
   if the area weighted average value meets the preset condition, stopping adjusting the orientation of the original 3D tooth model and maintaining the current orientation.

3. The method according to claim 1, **characterized in that** determining the undercut direction comprises:

   For any tooth in the original 3D tooth model, forming a coordinate system with mesiodistal direction, buccolingual direction and long axis direction as coordinate axis directions, and a center point of any tooth as a coordinate origin, and calculating a direction of any tooth in the coordinate system;
   determining the average value of the directions of teeth in the 3D teeth as the undercut direction.

4. The method according to claim 1, **characterized in that** identifying the tooth feature points of each tooth in the original 3D tooth model comprises:
   obtaining the tooth feature points of each tooth at target positions by identifying buccolingual feature points in each tooth through a preset recognition model, wherein the target positions comprise buccolingual cervical point of the crown and buccolingual gingival papilla point.

5. The method according to claim 4, **characterized in that** generating the edge line on the original 3D tooth model based on the plurality of the tooth feature points comprises:

   generating edge line with a straight-line type on the original 3D tooth model based on the tooth feature points at the buccolingual cervical point of the crown; or,
   generating edge line with a curve-type on the original 3D tooth model based on the tooth feature points at the buccolingual cervical point of the crown and the tooth feature points at the buccolingual gingival papilla points.

6. The method according to claim 1, **characterized in that** the undercut parameters comprises undercut filling ratio, model thickness, and relief space parameters between the model and the dentognathic jaw;
   generating the digital model of the dental appliances corresponding to the original 3D tooth model according to the undercut direction, the edge line, and the preset undercut parameters comprises:

   obtaining a target 3D tooth model by filling the undercut region of the original 3D tooth model according to the undercut filling ratio;
   taking the undercut direction as an insertion path direction of the digital model of the dental appliances to be generated;
   obtaining a target mesh by performing mesh extraction on the target 3D tooth model according to the insertion path direction and with the edge line as the boundary line;
   generating the digital model of the dental appliances corresponding to the original 3D tooth model by performing surface reconstruction on the target mesh according to a voxel method, the model thickness, and the relief space parameters between the model and the dentognathic jaw.

7. The method according to claim 1, **characterized in that** before generating the digital model of the dental appliances corresponding to the original 3D tooth model according to the undercut direction, the edge line and the preset undercut parameters, the method comprises:

acquiring preset user information, wherein the user information is used to indicate that the type of the edge line to be generated is a straight line type or a curve type, and values of the preset undercut parameters.

8. A digital generation apparatus for dental appliances, **characterized by** comprising:

a model acquisition module configured to acquire an original three-dimensional 3D tooth model;

an undercut direction determination module configured to adjust the orientation of the original 3D tooth model continuously, calculate an area of an undercut region of teeth in the original 3D tooth model during each adjustment, and stop the adjustment and determine an undercut direction until the area of the undercut region meets a preset condition;

a feature recognition module configured to identify tooth feature points of each tooth in the original 3D tooth model;

an edge line generation module configured to generate an edge line on the original 3D tooth model based on a plurality of the tooth feature points;

a model generation module configured to generate a digital model of the dental appliances corresponding to the original 3D tooth model according to the undercut direction, the edge line and preset undercut parameters.

9. An electronic device, **characterized by** comprising:

a processor;
a memory for storing executable instructions of the processor;
the processor configured to read the executable instructions from the memory and execute the instructions to implement the method according to any one of claims 1-7.

10. A computer-readable storage medium, **characterized in that** the computer-readable storage medium stores instructions, and when the instructions run on a terminal device, the terminal device is enabled to implement the method according to any one of claims 1-7.

```
┌──────────────────────────────────────────────────────────┐ ⟍ S102
│      acquiring an original three-dimensional (3D) tooth model      │
└──────────────────────────────────────────────────────────┘
                              │
                              ▼
┌──────────────────────────────────────────────────────────┐ ⟍ S104
│  adjusting the orientation of the original 3D tooth model continuously, │
│  calculating an area of an undercut region of teeth in the original 3D │
│  tooth model during each adjustment, and stopping the adjustment and │
│  determining an undercut direction until the area of the undercut region │
│                    meets a preset condition                    │
└──────────────────────────────────────────────────────────┘
                              │
                              ▼
┌──────────────────────────────────────────────────────────┐ ⟍ S106
│  identifying tooth feature points of each tooth in the original 3D tooth │
│                            model                            │
└──────────────────────────────────────────────────────────┘
                              │
                              ▼
┌──────────────────────────────────────────────────────────┐ ⟍ S108
│   generating an edge line on the original 3D tooth model based on a   │
│               plurality of the tooth feature points               │
└──────────────────────────────────────────────────────────┘
                              │
                              ▼
┌──────────────────────────────────────────────────────────┐ ⟍ S110
│ generating a digital model of the dental appliances corresponding to the │
│  original 3D tooth model according to the undercut direction, the edge  │
│             line and preset undercut parameters             │
└──────────────────────────────────────────────────────────┘
```

FIG. 1

FIG. 2

FIG. 3

buccolingual cervical point of the crown

buccal edge line with the straight-line type

lingual edge line with the straight-line type

FIG. 4

buccolingual gingival papilla point

buccal edge line with the curve-type

lingual edge line with the curve-type

FIG. 5

undercut filling ratio          model thickness          relief space parameters

FIG. 6

FIG. 7

model acquisition module 210

↓

undercut direction determination module 220

↓

feature recognition module 230

↓

edge line generation module 240

↓

model generation module 250

FIG. 8

processor 301

input device 303

memory 302

output device 303

electronic device 300

FIG. 9

## INTERNATIONAL SEARCH REPORT

| International application No. |
|---|
| **PCT/CN2024/096841** |

### A. CLASSIFICATION OF SUBJECT MATTER

G06T 17/20(2006.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN: CNABS; CNTXT; WOTXT; EPTXT; USTXT; CNKI; IEEE: 牙套, 数字化, 获取, 原始, 三维, 牙齿, 模型, 调整, 方向, 计算, 倒凹, 面积, 预设, 条件, 识别, 特征点, 生成, 边缘线, dental, braces, digital, model, acquiring, original, three, dimensional, tooth, direction, calculate, area, preset, condition, identify, feature, point, generate, edge, line

### C. DOCUMENTS CONSIDERED TO BE RELEVANT

| Category* | Citation of document, with indication, where appropriate, of the relevant passages | Relevant to claim No. |
|---|---|---|
| PX | CN 116824087 A (SHINING 3D TECH CO., LTD.) 29 September 2023 (2023-09-29) claims 1-10 | 1-10 |
| A | CN 111714235 A (SHENZHEN UP3D TECH CO., LTD.) 29 September 2020 (2020-09-29) description, paragraphs [0045]-[0100] | 1-10 |
| A | CN 114329964 A (SHANGHAI SMARTEE DENTAL TECHNOLOGY CO., LTD.) 12 April 2022 (2022-04-12) entire document | 1-10 |
| A | CN 103181829 A (WUXI EA MEDICAL INSTRUMENTS TECHNOLOGIES LIMITED) 03 July 2013 (2013-07-03) entire document | 1-10 |
| A | US 2023005196 A1 (3SHAPE A/S) 05 January 2023 (2023-01-05) entire document | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 August 2024** | **19 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 116824087 | A | 29 September 2023 | None | | | |
| CN | 111714235 | A | 29 September 2020 | None | | | |
| CN | 114329964 | A | 12 April 2022 | None | | | |
| CN | 103181829 | A | 03 July 2013 | None | | | |
| US | 2023005196 | A1 | 05 January 2023 | EP | 4069132 | A1 | 12 October 2022 |
| | | | | EP | 4069132 | B1 | 01 May 2024 |
| | | | | WO | 2021110938 | A1 | 10 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310800175X